Europäisches Patentamt

European Patent Office

Office européen des brevets

(11) Publication number: 0 349 467
A1

# EUROPEAN PATENT APPLICATION

(21) Application number: 89500070.1

(22) Date of filing: 23.06.89

(51) Int. Cl.⁵: F 16 H 25/06
F 16 H 1/32

(30) Priority: 27.06.88 ES 8802011
05.01.89 ES 8900054

(43) Date of publication of application:
03.01.90 Bulletin 90/01

(84) Designated Contracting States: DE FR GB

(71) Applicant: GOIZPER, S. COOP. LTDA.
Barrio Antigua s/n
E-20577 Anzuola Guipuzcoa (ES)

(72) Inventor: Legorburu Gabilondo, Francisco
Kalebarren, 1
Anzuola Guipuzcoa (ES)

(74) Representative: Carpintero Lopez, Francisco (ES)
HERRERO & ASOCIADOS, S.L. Alcalá, 21
E-28014 Madrid (ES)

(54) Improvements introduced in speed reducers and/or multipliers.

(57) Such improvements consist in providing the rollers (D) relating the wheel (C) to the ring (B) with elastic means (1,6) which tend to cause the said rollers (D) to remain permanently in contact with the corresponding holding flanges (F), in order that the rollers (D) are also permanently maintained in the orbital work circumference.

When the rollers (D), outside the work area, are located on the ring (B), such elastic means (1,6) are also established on the said ring (B), whereas in other reducers where outside the work area the rollers are housed in the wheel recesses, the said elastic means (1,6) are also established on the said wheel (C).

The said elastic means (1,6) may consist of one or several springs which act simultaneously on all the rollers (D), or of individual springs for each of such rollers (D), acting either directly on such rollers (D) or else through inserted protuberances.

Stabilization of the rollers is optionally achieved by fixing the same cantilevered to a common ring, forming a cage open at one of the ends thereof.

FIG.-4

Description

# IMPROVEMENTS INTRODUCED IN SPEED REDUCERS AND/OR MULTIPLIERS

## OBJECT OF THE INVENTION

The present invention relates to improvements introduced in speed reducers and/or multipliers, specifically of the type provided with wheel-ring sets having cogs formed by cycloid or ovoid curves, and specifically those with cogs connected to each other through inserted rollers, such reducers and/or multipliers having a work sector comprised betwen 0 and 180°.

Such improvements are aimed at causing the said rollers to remain in the position corresponding to their work travel, throughout the sector corresponding to the latter.

## BACKGROUND OF THE INVENTION

In speed reducers of the aforesaid type, such as for example the one disclosed in Spanish Utility Model 8800481, of the same applicant, although such reducers are provided with a holding system for the rollers, such as for example side flanges or expansion springs, such systems by no means guarantee that the roller shall enter the work area positioned on the specific orbital circumference in order that the roll begins at the proper place, and the roller wholly follows its theoretical and optimum work travel.

Figure 1 shows a diagrammatic view of a conventional speed reducer of the aforesaid type, where the work area has been labelled A, the ring B, the cogwheel C and the rollers D.

The rollers D only work in the arch A indicated and are inactive in the rest.

Figure 2, which is an enlarged detail of figure 1, shows the roller "d", close to work area A, duly positioned on orbital circumference E, resting on the holding flange F.

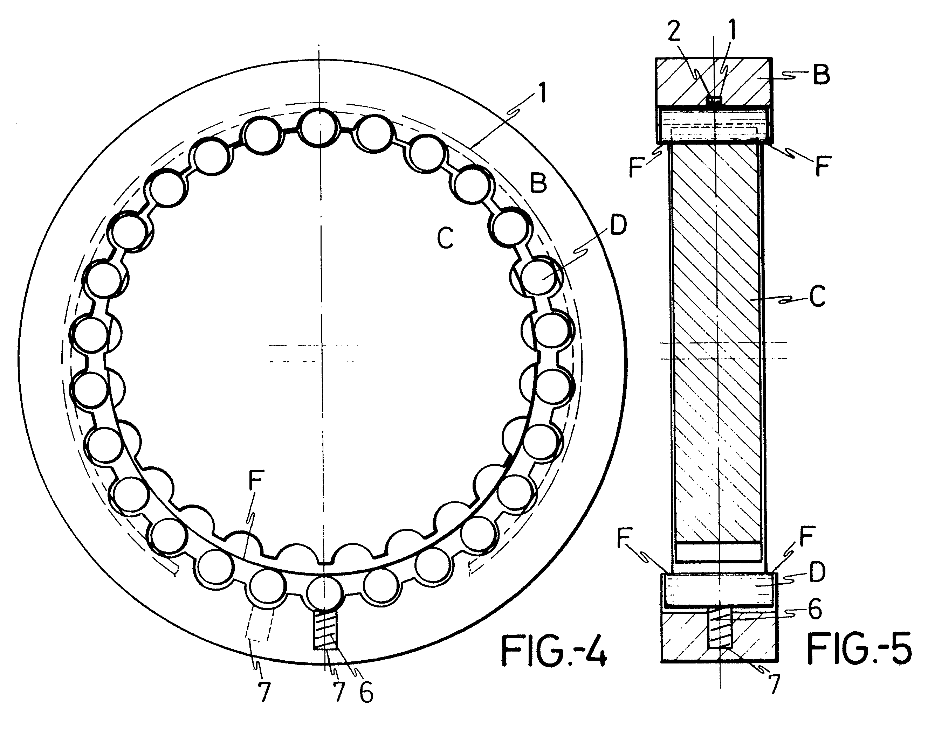

However, as the actual weight of roller "d" causes it to be loose when in the lower sector of the reducer, as a result of vibrations of the assembly or for any other reason, it sometimes loses contact with the said holding flange F, as shown in detail in figure 3, and the entry into the work area is not correct, since the wheel C comes into contact with the roller at G, whereupon the roller may jam against the ring, causing damage, heating and efficiency loss.

## DESCRIPTION OF THE INVENTION

The improvements set forth by the invention have been designed to fully solve these problems, causing the rollers to be in permanent contact with the holding flanges and, consequently, causing the same to enter into the work area in an ideal position.

More specifically, and in order to achieve the above, such improvements essentially comprise causing the rollers to remain in contact with the holding flanges, through one or several elastic bands, in turn housed in one or several grooves operatively made in the rings, which envelop all the rollers.

Optionally, this permanent contact of the rollers with the holding flanges may also be obtained by means of individual elastic elements for each of the said rollers, such as for example coil springs located in housings of the ring operatively facing each of the said rollers, which housings may also receive cylinders made of an elastomer material capable of pressing the rollers against the said flanges.

It is also possible to combine solutions, such as for example protuberances established in holes of the ring, provided in the same number and position as the rollers and simultaneously acted on by a single elastic and enveloping ring.

Obviously, in the case of wheel-ring sets housing the rollers positioned outside the work area in the wheel bores (rather than in the ring bores as in the previous case) and held by flanges being integral with such wheel, the rollers are obliged to remain leaning against the holding flanges, through any of the aforesaid solutions or elastic expansive elements, but in this case established on the wheel, rather than being established on the ring.

The rollers are at all events caused to permanently remain on the orbital circumference whereupon such rollers shall go into the work area in optimum conditions.

In accordance with a different embodiment and in order to achieve the same objectives, it has been foreseen that the rollers be assembled as cantilevered holding cages, and more specifically on a considerably thick ring, located on one of the sides of the wheel-ring assembly, which ring is fitted with a plurality of equally spaced holes, for assembly of respective rollers, that project from the said ring and are fixed by any suitable means, such as for example by a circlip or a holding ring, as a result of the said rollers being provided with a head of larger diameter, etc.

## DESCRIPTION OF THE DRAWINGS

In order to complement the description being made and to assist a better understanding of the characteristics of the invention, a set of drawings is attached to the present specification as an integral part thereof where the following has been shown in an illustrative and non-limiting manner:

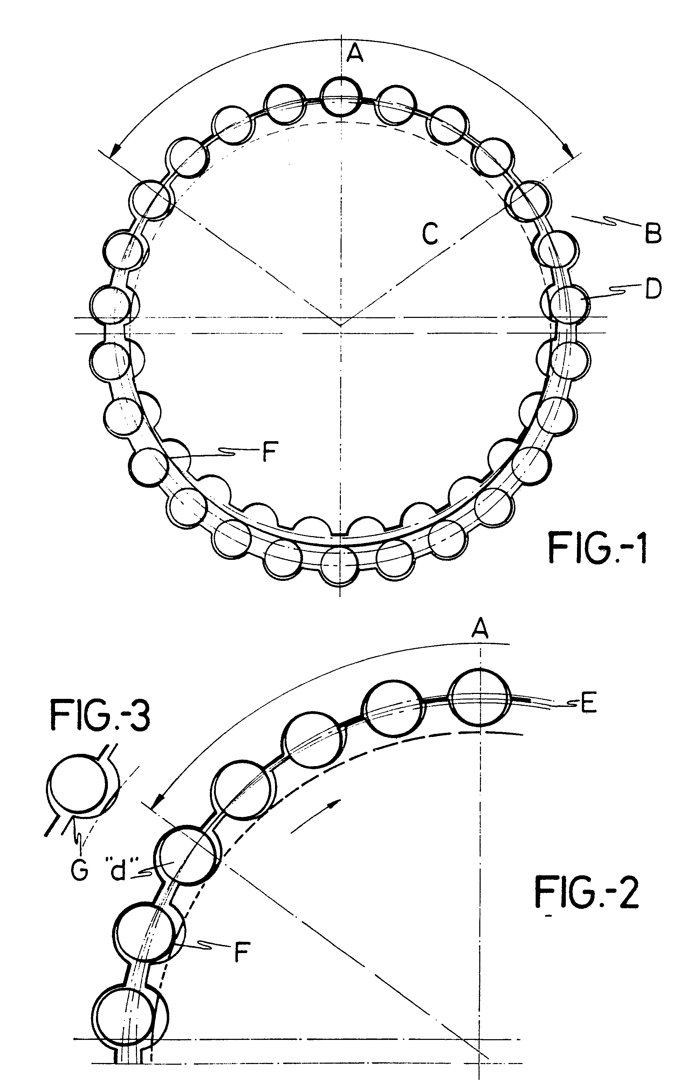

Figures 1, 2 and 3 show, as aforesaid, a conventional speed reducer, of the type to which the improvements of the invention may be applied, which figures are included to draw attention to the problems of this type of reducers.

Figure 4 is the same view of the speed reducer shown in figure 1, but already provided with the improvements of the invention.

Figure 5 shows a diametrical and diagrammatic section of the reducer of figure 4.

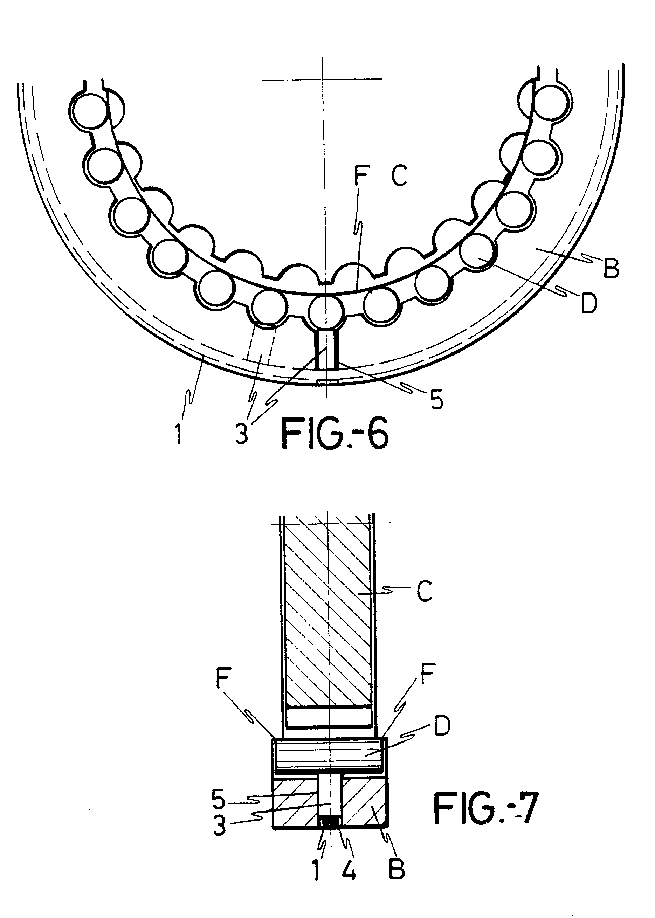

Figure 6 shows a partial view of figure 4, with a different position for the elastic elements pressing the rollers against the holding flanges.

Figure 7 shows a diametrical section of the assembly shown in the previous figure.

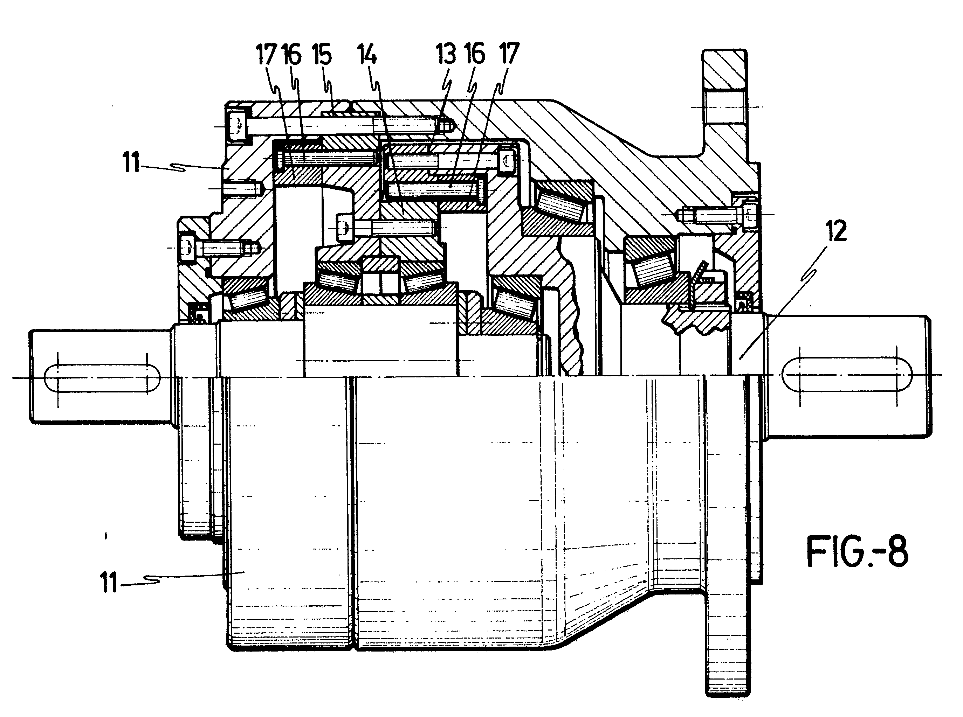

Figure 8 shows a side elevation and quarter cross-sectional view of a reducer of the same type as the one shown in the previous figures, but where the rollers form a cage, fixed cantilevered to a common ring.

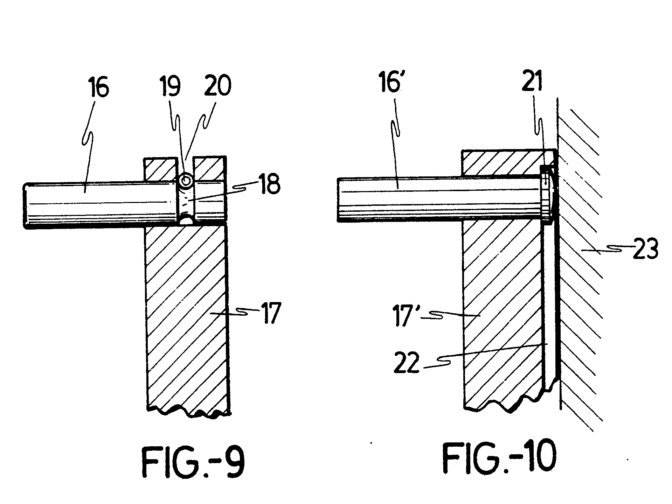

Figure 9 shows a cross-sectional detail of the fixing of a roller to the common ring by means of a circlip.

Figure 10 finally shows an alternative for axially holding the rollers to the common ring, in this case as a result of the rollers being provided with an expanded head.

## PREFERRED EMBODIMENT OF THE INVENTION

In the light of these figures, and more specifically figure 4, it may be seen that as from a speed reducer of the aforesaid type, provided with a ring B, a disc C and a plurality of rollers D, assisted by holding flanges F, the improvements of the invention essentially comprise elastically pressing such rollers against the said holding flanges F, with the help of an elastic element, such as for example, the circular spring (1), which may be either simple or multiple, duly housed in a slot or groove (2) of the ring B and which may act directly on the rollers D, as shown in figures 4 and 5, or else act through a series of protuberances (3), as shown in figures 6 and 7, in which case the simple or multiple circular spring (1) shall be housed in a groove (4) of the ring B, outside the latter, as may be clearly seen in figure 7, and the protuberances (3) shall play attracted by spring (1) in radial holes or housings (5) of the ring B.

Optionally and as is also shown in figures 4 and 5, specifically the lower part of the latter, the resilient element (1) common for all the rollers, of the previous solution, may be replaced by individual elastic elements (6), established in respective blind housings (7), similar to holes (5) above and having the same radial arrangement. These coil springs (6) may be substituted by rods made of elastomer material or any other element which may be capable of pressing the rollers D against the holding flanges F and, consequently, of stabilizing the rollers within the orbital work circumference.

This detailed description has been made on the basis of the practical embodiment where the rollers D, when outside the work area A, are housed in recesses of the ring B. However, there are speed reducers wherein, in these circumstances, the rollers D are housed in the recesses of the wheel C. Now then, in this case and as is obvious, any of the solutions previously set forth is equally valid to press the rollers against the holding flanges, with the only difference that in this case the resilient means described are established on the cogwheel rather than on the ring.

In figure 8, where the reducer is provided, as is conventional, with a framework (11) where the outlet shaft (12), with which the ring (13) is integral, is established, being related to the oscillating wheel (14) and furthermore being provided with a ring (15) being integral with the actual framework (11), in accordance with the improvements of the invention the rollers (16) are assembled and held cantilevered by one of their ends on a considerably thick support ring (17), although the said figure 8 shows two rings (17) respectively corresponding to the two sets of rollers (16) which this specific reducer is provided with.

The ring (17) is logically provided with as many holes as there are rollers (16) in the corresponding set, and consequently such rollers (16) are forced to a determined planetary movement, by their common support, which prevents wrong positions for the same caused by vibrations or any other reason.

Different solutions exist to hold the rollers (16) axially, such as for example the one shown in figure 9, where the said rollers are provided with a circular groove (18) which houses an elastic holding ring or circlip (19), that shall specifically carry out such holding and simultaneously has access to the grooves (18) of all the rollers (16) assembled on a same ring (17), through a slot (20) operatively made on the edge of the said ring (17).

Alternately and as may be observed in figure 10, the rollers, now labelled (6') and also assembled cantilevered on a ring (7'), may be provided with their holding end fitted with a widened head (21) housed in a slot (22) of the ring (7') surface opposite the cantilevered sector of the rollers (6'), which slot is closed by means of the actual wall (23) of the reducer and/or multiplier, whereby the head (21) is secured against displacement and, consequently, so are the rollers (6') secured against displacement.

As may be observed in the light of the above description, assembly of these rollers on the support ring (7) is easy, for such rollers form a cage which is open at their ends, i.e., wherein only one ring (7) takes part.

## Claims

1.- Improvements introduced in speed reducers and/or multipliers, specifically in reducers provided with wheel-ring sets having cogs formed by cycloid or ovoid curves, the wheel and the ring being related to each other through rollers partially controlled, in relation to their position, by a holding flange, essentially characterized in that they consist in the said reducers being provided with duly positioned elastic elements which cause the rollers to permanently be in contact with the said holding flanges.

2.- Improvements introduced in speed reducers and/or multipliers, in accordance with claim 1, characterised in that the said elastic means consist of one or several likewise elastic bands, housed in one or several grooves operatively made in the ring and which act directly on the rollers.

3.- Improvements introduced in speed reducers and/or multipliers, in accordance with claim 1, characterised in that the said elastic means are unitary for each roller and consist of a coil spring or of a cylinder made of an elastomer material, housed in a blind hole of the ring and which presses the roller against the holding flanges.

4.- Improvements introduced in speed reducers and/or multipliers, in accordance with claim 1, characterised in that the said elastic means consist of one or more likewise elastic bands, externally enveloping the ring, housed in a groove of the latter and which act on protuberances housed in radial bores of the said ring, which in turn lean on the respective rollers.

5.- Improvements introduced in speed reducers and/or multipliers, in accordance with the previous claims, characterised in that in speed reducers where outside the work area the rollers are housed in the cogwheel recesses, and are held by flanges being integral therewith, the previously mentioned elastic means are established on the cogwheel, rather than on the ring.

6.- Improvements introduced in speed reducers and/or multipliers, characterised in that the driving rollers (16) which relate the wheel (14)-ring (13) set to each other are assembled cantilevered on a ring (17) forming a cage open at one of the ends thereof, which ring (17) is provided with a circumferential alignment of equally spaced holes, in the same number as the rollers (16), with the particularity that the said rollers (16) are assembled with freedom of rotation in such holes, but secured against axial displacement.

7.- Improvements introduced in speed reducers and/or multipliers, in accordance with claim 6, characterised in that the axial holding element for the rollers (16) consists of a circlip (19) housed in a perimetral groove (20) of the actual ring (17) which has access to the holes where the rollers (16) are located and which is furthermore housed in a perimetral groove (18) of each of the said rollers (16).

8.- Improvements introduced in speed reducers and/or multipliers, in accordance with claim 6, characterised in that the end of the rollers (16') opposite the cantilever is provided with a widened head (21'), which is housed in a groove (22) of the ring (17') which supports the said rollers (16') such groove or slot (22) being closed with the actual side wall (23) of the reducer.

A

C

B

D

F

FIG.-1

A

E

FIG.-3

G "d"

F

FIG.-2

FIG.-4

FIG.-5

EP 0 349 467 A1

FIG.-6

FIG.-7

FIG.-8

FIG.-9

FIG.-10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 117 081 (R. BRAREN)<br>* Page 2, lines 115-121; claim 9; figure 1 * | 1,6 | F 16 H 25/06<br>F 16 H 1/32 |
| A | US-A-2 070 777 (B.W. BENBOW)<br>* Page 1 - page 2, lines 11-22; claim 3; figure 3 * | 1,3,4,5 | |
| A | EP-A-0 080 805 (EMERSON ELECTRIC CO.)<br>* Page 7, lines 5-19; figure 3 * | 6 | |
| A | DE-C- 936 306 (ROBERT KLING WETZLAR GmbH)<br>* Whole document * | 7 | |

TECHNICAL FIELDS SEARCHED (Int. Cl.5)

F 16 H
F 16 C

The present search report has been drawn up for all claims

| Place of search | Date of completion of the search | Examiner |
|---|---|---|
| THE HAGUE | 29-09-1989 | HELMROTH H.P. |